(19) **Europäisches Patentamt**
**European Patent Office**
**Office européen des brevets**

(11) **EP 4 600 700 A1**

(12) **EUROPEAN PATENT APPLICATION**

(43) Date of publication:
**13.08.2025 Bulletin 2025/33**

(21) Application number: **24156077.0**

(22) Date of filing: **06.02.2024**

(51) International Patent Classification (IPC):
**G01S 19/37** (2010.01)     **G01S 19/24** (2010.01)
**G01S 19/29** (2010.01)     **G01S 19/43** (2010.01)
**G01S 19/22** (2010.01)

(52) Cooperative Patent Classification (CPC):
**G01S 19/37;** G01S 19/22; G01S 19/246;
G01S 19/26; G01S 19/29; G01S 19/43

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventors:
• **CHENG, Zhenlan**
  **Thalwil (CH)**
• **VONLANTHEN, Manuel**
  **Thalwil (CH)**

(74) Representative: **Elkington and Fife LLP**
**Prospect House**
**8 Pembroke Road**
**Sevenoaks, Kent TN13 1XR (GB)**

(54) **PROCESSING A GNSS SIGNAL TO ESTIMATE A CARRIER PHASE**

(57)     A method and apparatus are provided for processing a GNSS signal received at a receiver. The method includes obtaining samples of the GNSS signal. The samples contain a carrier signal modulated by a spreading code. The method includes generating, based on the obtained samples, code-free samples. These code-free samples contain the carrier signal but the spreading code has been wiped off. The method may include storing a sequence of the code-free samples, the sequence having an associated duration. Additionally, the method comprises analysing the sequence of code-free samples to estimate one or more signal characteristics over the duration of the sequence. The signal characteristics include a carrier phase of the carrier signal.

FIG. 1

## Description

FIELD OF THE INVENTION

The present invention relates to Global Navigation Satellite Systems (GNSS). In particular, it relates to estimating signal characteristics of GNSS signals. The signal characteristics may include a carrier phase, in particular.

BACKGROUND OF THE INVENTION

Techniques for GNSS positioning are well known in the art. Existing GNSS include the Global Positioning System (GPS), Galileo, GLONASS, and Bei-Dou Navigation Satellite System (BDS), also referred to herein as simply "BeiDou". Each GNSS comprises a constellation of satellites, also known in the art as "space vehicles" (SVs), which orbit the earth. Typically, each SV transmits a number of satellite signals. These are received by a GNSS receiver whose position it is desired to calculate. The GNSS receiver can make a number of ranging measurements using the signals, to derive information about the distance between the receiver and respective satellites. When a sufficient number of measurements can be made, the receiver's position can then be calculated by multilateration.

In order to make a GNSS measurement, it is necessary to acquire and track the relevant GNSS signal. While this may be relatively easy under open sky conditions, it may become more challenging under more difficult signal reception conditions. Multipath conditions may present particular difficulties. The accuracy of the position calculation depends on the accuracy of the ranging measurements. However, when significant multipath is present, the GNSS receiver may acquire and track a reflected version of the satellite signal, rather than the direct "line of sight" (LoS) signal. The reflected version is likely to have a different path length and therefore will produce a different ranging measurement, which may corrupt or degrade the accuracy of the resulting position fix.

Under challenging signal reception conditions, the LoS signal may be received weakly. Therefore, in order to successfully acquire and track the LoS signal, the receiver sensitivity should be as high as possible. Increasing the receiver sensitivity increases the likelihood of being able to detect the LoS GNSS signal, which in turn increases the likelihood of being able to reject multipath.

More generally, any signal reception conditions that cause deep fading are likely to present difficulties for the receiver. Deep fading may be a result of multipath or may be a result of other phenomena, such as atmospheric scintillation. Deep fading coupled with rapid dynamics of the receiver may be particularly challenging. In deep fading, the received signal power drops temporarily to a relatively low level. Especially when coupled with fast dynamics (for example, sudden acceleration) of the receiver, this can increase the likelihood of cycle slips and/or loss of signal lock.

SUMMARY OF THE INVENTION

It would be desirable to make the receiver more sensitive to GNSS signals and more robust to deep fading.

In a conventional GNSS receiver design, carrier phase is tracked using a phase locked loop and/or a frequency locked loop. With this approach, the estimates of carrier phase that are used to calculate the navigation solution are coupled to the tracking loop. The present inventor has recognised that it may be advantageous to decouple (i) the carrier phase estimates that are generated (explicitly or implicitly) during real-time signal-tracking and used for feedback control from (ii) the carrier phase estimates that are used for positioning calculations. This is because the estimates generated in the course of real-time signal-tracking are inherently based on limited information (based, at most, on observations of the past and present). By relaxing the requirement to use the same (real-time) estimates, estimates of carrier phase may be derived that are based on additional information. For instance, instead of being based solely on signal samples in a narrow time interval (like the real-time carrier phase estimates produced in the tracking loop), carrier phase estimates can be derived that take into account past and future signal samples - that is signal samples both before and after the time interval for which the carrier phase is being estimated. This can enable greater robustness and thereby sensitivity to deep fading signals.

A method and apparatus are provided for processing a GNSS signal received at a receiver. The method includes obtaining samples of the GNSS signal. The samples contain a carrier signal modulated by a spreading code. The method includes generating, based on the obtained samples, code-free samples. These code-free samples contain the carrier signal but the spreading code has been wiped off. The method may include storing a sequence of the code-free samples, the sequence having an associated duration. Additionally, the method comprises analysing the sequence of code-free samples to estimate one or more signal characteristics over the duration of the sequence. The signal characteristics include a carrier phase of the carrier signal.

According to one aspect, there is provided a method of processing a GNSS signal received at a receiver, the method comprising:

obtaining samples of the GNSS signal, wherein the samples contain a carrier signal modulated by a spreading code;

generating, based on the obtained samples, code-free samples, wherein the code-free samples contain the carrier signal but the spreading code has been wiped off;

storing a sequence of the code-free samples, the sequence having an associated duration;

analysing the stored sequence to estimate one or more signal characteristics over the duration of the sequence, wherein the one or more signal characteristics include a carrier phase of the carrier signal.

Storing the sequence may comprise storing the sequence in a memory. Storing the sequence may comprise accumulating the sequence of the code-free samples (for example, accumulating incrementally, one sample at a time) and storing it in the memory.

Analysing the accumulated sequence may comprise post-processing the accumulated sequence.

The obtained samples may be samples output by an IF processing unit.

In some examples, generating the code-free samples may comprise wiping off the spreading code from the samples output by the IF processing unit - for example, by generating a local spreading code and correlating the obtained signal samples with the local spreading code. In other examples, the code-free samples may be generated in other ways.

The code-free samples contain (or "still" contain) the carrier signal, in the sense that (i) no attempt has been made to wipe off the carrier signal or (ii) the carrier signal has been wiped off but restored. In the first case, the carrier signal has not been wiped off from the code-free samples. In particular, the code-free samples have not been mixed with a local carrier signal. In the second case, the carrier signal has been restored, after initially being wiped off. In both cases, the code-free samples are samples that could in principle be mixed with a local carrier signal to generate code-free and carrier-free samples.

In a conventional receiver, there may be some residual carrier signal even after an attempt to wipe off the carrier signal. However, it should be understood that this is not intended to be within the scope of the "code-free samples", according to the present disclosure.

The method may comprise: generating a local carrier signal; mixing the obtained samples with the local carrier signal to generate carrier-free signal samples; generating a local spreading code; generating code-free and carrier-free samples, comprising correlating the carrier-free signal samples with the local spreading code; and generating the code-free samples based at least in part on the code-free and carrier-free samples.

In some examples (for some GNSS signals), the code- and carrier-free samples may be millisecond samples. This is the case for GPS L1 signals, for instance.

Generating the code-free samples may be considered as reconstructing the code-free samples from the code- and carrier-free samples.

In other words, generating the code-free samples may comprise or consist of reconstructing the code-free samples based at least in part on the code-free and carrier-free correlation result samples.

The code- and carrier-free correlation result samples may be complex-valued.

The method optionally comprises: storing a sequence of the code-free and carrier-free samples to provide stored signal samples; and generating the code-free samples based at least in part on the stored signal samples.

Storing the sequence of the code-free and carrier-free samples may comprise accumulating the sequence of the code-free and carrier-free samples (for example, accumulating them incrementally, one sample at a time).

The method may comprise: subsampling the code-free and carrier-free samples to generate sub-sampled signal samples; storing a sequence of the sub-sampled signal samples to provide stored signal samples; and generating the code-free samples based at least in part on the stored signal samples.

The subsampled signal samples may be at a lower sample rate than the code-free and carrier-free samples. The subsampled signal samples may be subsampled by a factor of between 2 and 8, optionally between 4 and 6, optionally 5.

Storing the sequence of the sub-sampled signal samples may comprise accumulating the sequence of the sub-sampled signal samples (for example, accumulating them incrementally, one sample at a time).

Subsampling the code-free and carrier-free samples may comprise at least one of: summing groups of the code-free and carrier-free samples; and averaging groups of the code-free and carrier-free samples. The groups summed or averaged may be groups of consecutive code-free and carrier-free samples.

The method may comprise: generating a carrier control signal, wherein generating the local carrier signal is controlled by the carrier control signal; storing a sequence of values of the carrier control signal; and generating the code-free samples based on the stored signal samples and the stored sequence of values of the carrier control signal.

The local carrier signal may be generated to have a carrier frequency that is determined by the carrier control signal. By setting the carrier frequency, the carrier control signal may indirectly control the carrier phase of the local carrier signal. Increasing the carrier frequency advances the phase; decreasing the carrier frequency retards the carrier phase. The method may additionally comprise generating a carrier phase control signal, which directly sets the phase of the local carrier signal. Generating the local carrier signal may be controlled by both the carrier (frequency) control signal and the carrier phase control signal. The carrier phase control signal may be used to implement non-incremental steps/jumps in carrier phase. The method may further comprise storing a sequence of values of the carrier phase control signal, and generating the code-free samples based on the stored signal samples, the stored sequence of values of the carrier control signal, and the stored sequence of values of the carrier phase control signal.

The sequence of values of the carrier control signal may correspond temporally to the sequence of the code-free samples. That is, they may relate to the same time interval. The sequence of values of the carrier control signal may have a sample-rate that is lower than the sample-rate of the stored signal samples. For example, the carrier control signal values may be generated at a rate of 100 Hz (1 value every 10 ms, or 100 values per second), while the stored signal samples may have a sample-rate of 200 Hz (1 sample every 5 ms, or 200 samples per second). In another example, the carrier control signal values may be generated at a rate of 50 Hz (1 value every 20 ms, or 50 values per second).

Each value of the carrier control signal may control the frequency of the local carrier signal for a given control period - for example, 10 ms or 20 ms. The local carrier signal may therefore have a frequency which is piecewise constant, and which changes only at the boundary between control periods (corresponding to a change in the value of the carrier control signal).

By knowing the values of the carrier control signal (and optionally the values of the carrier phase control signal) that were used to generate the local carrier signal (which, in turn, was used for the mixing to generate the carrier-free signal samples) it is possible to account for the influence of the local carrier signal over the duration of the sequence.

Generating the code-free samples based on the stored signal samples and the stored sequence of values of the carrier control signal may comprise: for each stored value of the carrier control signal, rotating a phase of a corresponding subset of the stored signal samples based on said stored value.

Rotating the phase in this way may reverse a phase change applied by the action of the local carrier signal during the mixing operation. In particular, the phase may be rotated based on a difference between the carrier frequency (determined by said stored value of the carrier control signal) and a reference frequency $f_0$.

Generating the code-free samples may further comprise, for each stored value of the carrier control signal, shifting a phase of the respective subset of the stored signal samples by a common phase shift. The common phase shift may be calculated to align a phase of the first signal sample of the subset with a phase of the final signal sample of the preceding subset.

The method may further comprise estimating at least one of a residual carrier frequency and a residual carrier phase, for the GNSS signal, based on the code-free and carrier-free samples, wherein the carrier control signal is optionally a feedback signal that is generated based on a result of said estimating.

In this way, a tracking loop is implemented, which enables tracking of the carrier signal. The local carrier signal can be generated such that its phase matches (at least approximately) the phase of the carrier signal of the GNSS signal. This tracking loop can be independent of the estimation of the signal characteristics based on the analysis of the stored sequence.

Estimating the residual carrier frequency and/or residual carrier phase may comprise performing a discrete Fourier transform, DFT, on the code-free and carrier-free samples (also referred to herein as the complex-valued correlation results). The residual carrier frequency and/or residual carrier phase may be estimated based on a result of the DFT.

The method may comprise: estimating at least one of a residual carrier frequency and a residual carrier phase, for the GNSS signal; and generating a carrier control signal based on a result of said estimating, wherein generating the local carrier signal is controlled by the carrier control signal.

In some examples, the residual carrier frequency and/or residual carrier phase may be estimated based on the code-free and carrier-free samples.

The local carrier signal may be generated in a plurality of control periods. The carrier control signal may comprise a sequence of values. Each value may correspond to a respective one of the control periods and may be used to set the frequency of the local carrier signal in that control period. The local carrier signal may therefore have piecewise-constant frequency, wherein the frequency is constant during each control period.

The duration associated with the sequence of code-free samples may be longer than the control period. It may be a multiple of the control period duration. For example, the duration of the sequence of code-free samples may be at least 10 times, or at least 20 times the control period duration. In one example, the duration of the sequence of code-free samples may be equal to 50 times the control period duration. By analysing a sequence of code-free samples that is longer than the individual control periods, the method can enable information to be assimilated from multiple control periods, with the potential to improve the quality of estimation as a result.

The sequence may be a first sequence, and the method may further comprise: obtaining second samples of the GNSS signal; generating, based on the obtained second samples, second code-free samples, wherein the second code-free samples contain the carrier signal but the spreading code has been wiped off; storing a second sequence of the second code-free samples, the second sequence having an associated duration; and analysing the stored second sequence to estimate one or more signal characteristics over the duration of the second sequence, wherein the one or more signal characteristics include a carrier phase of the carrier signal, wherein the second sequence overlaps with the first sequence.

Analysing a second, overlapping sequence of code-free samples can enable estimates of the signal characteristics to be produced at shorter intervals (in particular, regular intervals shorter than the duration of each of the sequences).

The second samples of the GNSS signal may overlap with the (first) samples of the GNSS signal. The second samples may also contain the carrier signal modulated by the spreading code. The first sequence and the second sequence may have the same duration.

In this context, "overlap" means that some of the elements are common and some of the elements are different. For example, the start of the second sequence may be after the start of the first sequence and before the end of the first sequence. The end of the second sequence may be after the end of the first sequence.

Analysing the stored sequence optionally comprises processing the stored sequence using at least one of: a Kalman smoother; a Kalman filter; and a neural network trained to estimate the one or more signal characteristics. The stored second sequence may be analysed in the same way.

The method may further comprise using the one or more estimated signal characteristics to assist in the calculation of a position fix.

The estimated carrier phase of the GNSS signal may be used together with the estimated carrier phases of other GNSS signals, in a multilateration calculation.

Also provided is a computer program comprising computer program code configured to cause one or more physical computing devices to perform all the steps of a method as summarised above when said computer program is run on said one or more physical computing devices. The one or more physical computing devices may comprise or consist of one or more processors of a GNSS receiver. The computer program may be stored on a computer-readable medium (optionally non-transitory).

Also provided is a Global Navigation Satellite System, hereinafter GNSS, receiver, configured to process a GNSS signal, the GNSS receiver comprising a measurement engine configured to:

> obtain samples of the GNSS signal, wherein the samples contain a carrier signal modulated by a spreading code;
> generate, based on the obtained samples, code-free samples, wherein the code-free samples contain the carrier signal but the spreading code has been wiped off;
> store a sequence of the code-free samples, the sequence having an associated duration; and
> analyse the stored sequence to estimate one or more signal characteristics over the duration of the sequence, wherein the one or more signal characteristics include a carrier phase of the carrier signal.

The GNSS receiver may further comprise: an RF front-end, for receiving the GNSS signal, and for down-converting and digitising the GNSS signal; and a mixer for wiping off the carrier signal. The GNSS receiver may further comprise an intermediate-frequency (IF) processing unit, for processing the signal down-converted from RF to IF by the RF front-end. An output of the RF front-end may be coupled to an input of the intermediate-frequency processing unit. An output of the IF processing unit may be coupled to an input of the mixer.

The GNSS receiver may further comprise at least a first correlator, coupled to an output of the mixer, configured to wipe off a spreading code of the GNSS signal. The first correlator may be part of a bank of correlators, including early, prompt, and late correlators.

One or more outputs of the first correlator may be coupled to at least one tracking loop, including one or both of a code tracking loop and a carrier tracking loop.

The at least one tracking loop may comprise a code-phase feedback controller configured to estimate the code phase of the GNSS signal; the GNSS receiver may further comprise a code generator, configured to generate the local spreading code.

The code generator may comprise a numerically controlled oscillator (NCO), configured to generate a clock signal for generating the local spreading code.

The code generator may provide an input to the correlator to enable it to wipe off the spreading code of the GNSS signal.

The GNSS receiver may further comprise a carrier generator, configured to generate a local carrier signal for wiping off the residual carrier from the GNSS signal. The carrier generator may comprise an NCO configured to generate the local carrier signal.

The GNSS receiver may comprise a memory for storing the sequence of the code-free samples.

The GNSS receiver may further comprise a pre-integration unit configured to subsample the code-free and carrier-free samples to generate sub-sampled signal samples.

The GNSS receiver may comprise a memory and may be configured to store in the memory a sequence of the sub-sampled signal samples to provide stored signal samples. In other examples, the stored signal samples in the memory might not have been sub-sampled.

The GNSS receiver may comprise a first processor, configured to generate code-free samples based at least in part on the stored signal samples. The first processor may be a reconstruction processor.

The GNSS receiver may further comprise a second processor, configured to analyse the stored sequence to estimate the one or more signal characteristics. The second processor may be (or may comprise, or may implement) a Kalman smoother, a Kalman filter, or a neural network.

BRIEF DESCRIPTION OF THE DRAWINGS

Examples according to the present disclosure will now be described with reference to the accompanying drawings, in which:

> Fig. 1 is a block diagram of a GNSS receiver according to a first example; and
Fig. 2 is a block diagram of a GNSS receiver according to a second example;

It should be noted that these figures are diagrammatic and not drawn to scale.

DETAILED DESCRIPTION

Reference will now be made in detail to examples according to the present disclosure, which are illustrated in the accompanying drawings. The described examples should not be construed as being limited to the descriptions given in this section; the examples may have different forms.

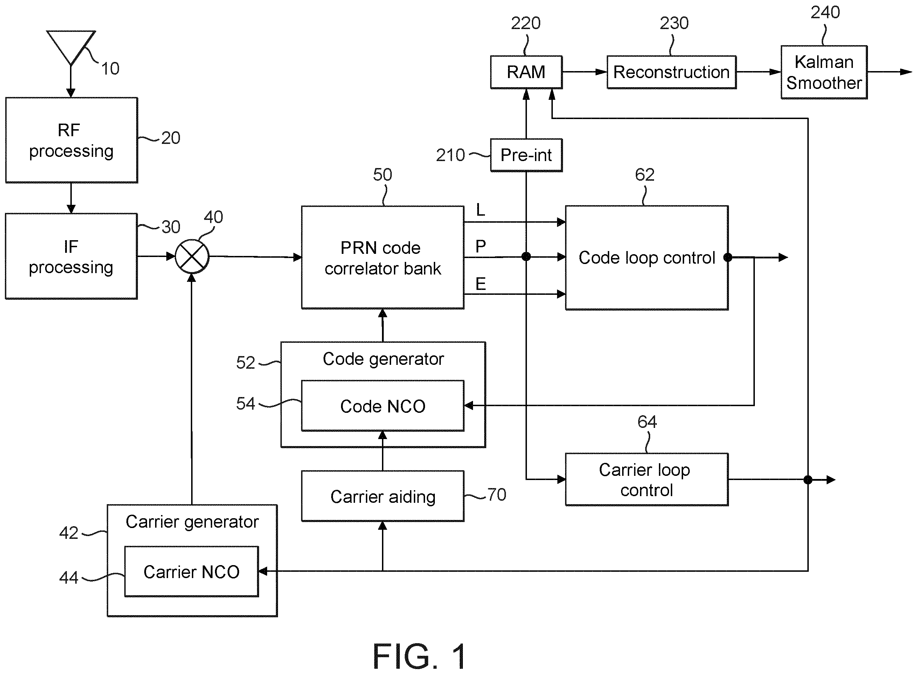

Fig. 1 is a block diagram of a GNSS receiver according to a first example. The GNSS receiver is configured to receive satellite signals from GPS satellites. It may alternatively or additionally be configured to receive satellite signals from other constellations (for example, Galileo and BeiDou). The GNSS receiver comprises an antenna 10 for receiving satellite signals. An RF front-end 20, coupled to the antenna 10, is configured to down-convert and digitise the satellite signals received via the antenna 10. The RF front-end essentially conditions the signals for subsequent signal processing. Other typical tasks performed by the front-end include filtering, amplification and automatic gain control. The satellite signals received at the RF front-end 20 via the antenna 10 include an L1C/A signal.

The GNSS receiver further comprises an intermediate frequency (IF) processing unit 30, configured to process the satellite signals converted from radio frequency (RF) to IF in the RF front-end. The output of the IF processing unit 30 is coupled to an input of a mixer 40. The other input of the mixer 40 receives a local carrier wave, also referred to as a replica carrier signal, generated to replicate (as closely as practicable) the carrier frequency and phase of the incoming signal. The replica carrier signal is a digital sinusoidal signal generated by a carrier generator 42. In this way, the mixer 40 is configured to wipe off, i.e. remove, any residual carrier, e.g. offset caused by the Doppler effect, from the incoming signal, by mixing the incoming signal with the replica carrier signal (in other words, calculating the product of the incoming signal and the replica carrier signal). In the present example, it will be assumed that the intermediate frequency is (approximately) zero. Although the carrier of the satellite signal is in principle already removed before the incoming signal reaches the mixer 40, there will be a (small) constant remaining IF and a varying carrier offset caused by the relative motion between the satellite and GNSS receiver. The carrier generator 42 comprises a numerically controlled oscillator (NCO) 44 configured to generate the replica carrier signal.

The output of the mixer 40 is provided as input to a bank 50 of correlators comprising three correlators. Each correlator comprises a multiplier and an integrate-and-dump (I/D) unit (not shown in Fig. 1). The output of each multiplier is provided as input to the respective integrate-and-dump (I/D) unit. Each multiplier multiplies the input signal by a replica spreading code. Each I/D unit calculates the sum of the resulting product values, over a suitable dwell. The dwell defines the length of a coherent integration within the correlator, and corresponds an integer number of iterations (most commonly one iteration) of a spreading code used to modulate the GNSS signal. The bank of correlators includes an "early" (E) correlator, a "prompt" (P) correlator; and a "late" (L) correlator. As their names suggest, these three correlators use differently shifted versions of the replica spreading code. The replica spreading code is a binary pseudorandom noise (PRN) signal, and is generated by a code generator 52, which operates under the control of code loop controller 62. The code loop controller 62 receives the outputs of the three I/D units. It should be understood that the use of three correlators is merely illustrative. In many examples, there may be more than three correlators. In particular, there may be multiple "early" correlators, each with a different delay (shift) of the replica spreading code. Likewise, there may be multiple "late" correlators, each with a different delay (shift) of the replica spreading code. According to one implementation there are four "early" correlators and four "late" correlators, in addition to one prompt correlator - that is, nine correlators in total.

Depending on which of the correlators (E, P, L) has the maximum output value for the current dwell, the controller 62 determines whether to adjust (for example, increment or decrement) the code phase delay control signal, which it provides to the code generator 52.

The code generator 52 is a signal code generator for the relevant GNSS signal. It comprises an NCO 54, which is configured to generate a clock signal for generating the replica spreading code for the GNSS signal. The NCO is controlled partly by the code phase delay control signal from the code loop controller 62 and partly based on frequency estimates generated by a carrier loop controller 64.

In this way, the bank of correlators, together with the code loop controller 62, carrier loop controller 64, and the code generator 52, function as a code phase tracking loop - in other words, a delay locked loop (DLL) - for the GNSS signal. The code phase tracking loop ensures that the code phase of the replica spreading code used by the "P" correlator tracks the actual code phase of the received other L1 signal with as little delay as possible.

The outputs of the I/D units within the bank 50 of correlators consist of complex-valued samples, also referred to as in-phase and quadrature samples (I/Q samples). In particular, the output of the I/D unit for the prompt (P) correlator represents I/Q samples of the GNSS signal. When implemented in hardware, each correlator (as with other hardware blocks), will include separate I- and Q-branches. That is, there will be a multiplier and an I/D unit for the in-phase (I) samples, and another multiplier and I/D unit for the quadrature-phase (Q) samples. Nevertheless, for simplicity, it is more convenient to conceptualise these as a single multiplier and a single I/D unit, having complex outputs, and that is how they will be described here.

The I/Q samples from the prompt ("P") correlator output are provided to the carrier loop controller 64. The carrier loop controller 64 estimates the carrier frequency and carrier phase of the GNSS signal. It outputs the estimate as a carrier control signal, which is fed back to control the NCO 44 of the carrier generator 42. In providing this feedback, the carrier loop controller 64 implements a carrier tracking loop for the GNSS signal, ensuring that the frequency (and phase) of the replica carrier signal (generated by the carrier generator 42) tracks the actual frequency (and phase) of the carrier of the received L1 signal as closely as possible. This enables the GNSS receiver to take account of Doppler shift, due to the relative motion between the receiver and satellite. By controlling the frequency of the NCO in the carrier generator 42, both the frequency and phase of the replica carrier signal are controlled to match the frequency and phase of the residual carrier. (The phase of the replica carrier signal is advanced by increasing the frequency; the phase is retarded by decreasing the frequency.) Effectively, this implements a phase locked loop (PLL), tracking the residual carrier frequency and phase.

In the present implementation, the code loop controller 62 and the carrier loop controller 64 produce updates at the same rate - for example, 50 Hz. That is, they both operate on the same control period - in this example, 20 ms. The carrier generator 42 holds the frequency of the carrier NCO 44 constant for each 20 ms control period, and the code generator 52 holds the rate of the code NCO 54 constant for each such period too.

As well as updating the NCO 54 of the code generator 52 based on the code phase measurements produced by the code loop controller 62, it may be advantageous to update the chipping rate (and thereby code phase) of the NCO 54 based on the output of the carrier loop controller 64. Carrier aiding block 70 converts the output of the carrier loop controller 64 (which is effectively an estimate of Doppler frequency) into a chipping rate control value for the code NCO 54. The code NCO 54 runs at the specified chipping rate over the course of the control period (e.g., 20 ms). The chipping rate thereby influences the evolution of the code phase of the replica spreading code. The chipping rate control value is a down-scaled value from the Doppler estimate, based on the constant ratio of nominal carrier frequency to nominal chipping rate. If the code loop controller 62 detects a change/error in the code phase, it updates the code phase delay control signal accordingly, in the next control period. This control of the code phase is added to the cumulative effect of the chipping rate control.

Note that, in contrast to the carrier NCO 44, the code NCO 54 has two inputs - one for chipping rate control (from carrier aiding block 70, based on the Doppler estimate from the carrier loop controller 64) and one for code phase control (from the code loop controller 62). They are controlled independently. The chipping rate control determines the chipping rate. The code phase control determines the initial code phase of the control period. As a result, the code phase is not necessarily continuous at the boundary between control periods.

The components described above enable the GNSS receiver to track the GNSS signal in frequency and phase of the carrier as well as code phase. The code tracking loop and the carrier tracking loop form a "measurement engine" that includes blocks 40-70.

In tracking mode, the output of the code loop controller 62 provides a real-time code phase measurement. Likewise, the output of the carrier loop controller 64 provides a real-time Doppler measurement. This code phase measurement and Doppler measurement are provided to a positioning engine (not shown in Fig. 1) which combines them with GNSS measurements from other GNSS signals to calculate a navigation solution (including a position fix). Optionally, the phase of the carrier generator 42 can be used to provide a real-time carrier phase measurement for use in calculating a real-time kinematic (RTK) or precise point positioning (PPP) solution. However, the present example derives the carrier phase measurement used for positioning in a different way, to be described later, below. It should be understood that the carrier phase measurement of the present example can be used in the calculation of a position fix either as an alternative to, or in addition to, a real-time carrier phase measurement associated with the phase of the carrier generator.

In acquisition mode, the code loop controller 62 can detect whether a GNSS signal has been acquired successfully, or whether the tracking loop is in effect tracking noise. This can be done by comparing the correlation results on the early, late, and prompt taps. When a GNSS signal is present, the magnitude of the correlation output on the prompt tap is significantly greater than the respective magnitudes on the early and late taps.

Demodulation / bit-detection is not illustrated in the simplified block diagram of Fig. 1. However, it should be understood that this is typically also performed, in practice, when receiving GNSS signals. When tracking a pilot sequence, there is no need for bit detection. When tracking the remainder of the GNSS signal, bit detection can be performed by examining phase changes from symbol to symbol on the prompt correlator output.

The tracking scheme of Fig. 1 works well when signal reception conditions are good (at least for the GNSS signal in question). (Fig. 1 illustrates the tracking method for one GNSS signal, but it should be understood that the receiver will typically track several GNSS signals simultaneously, in order to produce a navigation solution.)

The GNSS receiver further includes: a pre-integration unit 210; a memory, such as random access memory (RAM) 220; a first processor, such as reconstruction processor 230; and a second processor, such as Kalman smoother 240.

The pre-integration unit 210 is optional. When it is present, an input of the pre-integration unit 210 is coupled to the output of the prompt (P) correlator. The pre-integration unit 210 receives the I/Q samples from the correlator and sums together consecutive groups of them. The effect of this is to reduce the sample rate at the output of the pre-integration unit 210, compared to the sample rate at its input. The pre-integration unit 210 may therefore be considered more generally as a down-sampling unit.

For instance, the pre-integration 210 may sum together (that is add together) successive pairs of samples, to reduce the sample rate. In this case, if the incoming I/Q samples are numbered 0-7, the pre-integration unit 210 would calculate the sum of sample 0 and sample 1, the sum of sample 2 and sample 3, the sum of sample 4 and sample 5, and so on, to produce a sequence of 4 complex output values based on the input sequence of 8 complex values. In another example, the pre-integration unit 210 may sum together groups of four successive samples. Therefore (using the same sample numbering as before), the pre-integration unit would calculate the sum of samples 0 to 3, and the sum of samples 4 to 7. In this way, it would produce a sequence of 2 complex output values based on the input sequence of eight complex values. In other examples, the pre-integration unit 210 may sum a different number of samples, such as 5, 6, 7 or 8 samples.

The complex output values from the pre-integration unit 210 are provided as input to the random access memory (RAM) 220, where a finite sequence of them is then stored. If the pre-integration unit 210 is not included, the I/Q samples output by the prompt (P) correlator are provided directly to the RAM 220 for storage. The RAM 220 also receives the carrier control signal values that are output by the carrier loop controller 64. A finite sequence of these is also stored in the RAM 220. Each value of the carrier control signal is associated with a respective group of samples - either of the (pre-integrated) samples received from the pre-integration unit 210 or of the (non-pre-integrated) samples received directly from the prompt (P) correlator. The samples each the group are those corresponding to the control period during which the respective value of the carrier control signal was controlling the carrier generator 42.

The length of the sequence of samples stored in the memory (and likewise the length of the sequence of carrier control signal values) may be selected based on application requirements. The length of each sequence may correspond to the interval between epochs - that is, between successive calculations of a navigation solution. In one example, the navigation solution is output once per second. The sequences stored in the memory therefore correspond to one second's worth of samples and one second's worth of carrier control signal values.

The samples and carrier control signal values stored in the memory are processed by the first processor (in this example, reconstruction processor 230). The first processor is configured to generate code-free samples based on the signal samples stored in the memory. Here, "code-free" refers to samples that have had the spreading code removed, but in which the carrier signal is preserved. It should be noted that such code-free samples are not generated natively in the tracking loop of the receiver illustrated in Fig. 1. This is because the residual carrier signal is wiped off first, by mixer 40, and the spreading code is wiped off second, from the carrier-free signal, by the correlator bank 50. In other words, the output of the mixer 40 is a carrier-free signal (consisting of carrier-free samples), and the output of the prompt (P) tap in the correlator bank 50 is a carrier- and code-free signal (consisting of carrier- and code-free samples). The first processor (e.g., reconstruction processor 230) is configured to generate signal samples in the form they would be if the spreading code was wiped off first, before the wipe-off of the carrier signal. In effect, it "reconstructs" code-free samples, from the carrier- and code-free samples, by reintroducing the carrier signal.

Within each control period, the carrier NCO 44 is set to a constant frequency. The millisecond samples produced by the correlator bank 50 can be considered as being the 1 ms integrated sum of the mixing product of the fictive code-free samples and the local carrier generated with the configured carrier NCO frequency during the relevant control period. The carrier phase of the NCO 44 is usually not controlled independently of the frequency. This means that the carrier phase evolves according to the frequency and there are no jumps in carrier phase at the start/end of a control period (that is, from one control period to the next). Consequently, the I/Q samples output by the mixer 40 and the correlator bank 50 are phase-continuous from control period to control period.

Let us assume that code-free samples (code-free I/Q samples) have already been reconstructed for the previous control period. The local carrier phase generated by the carrier NCO 44 to process the first sample of the current control period is denoted $\Phi$. Since local carrier phase develops continuously, $\Phi$ can be calculated iteratively, given all the carrier NCO frequencies in the past. The local carrier in the current control period is $e^{j2\pi fkT + j\Phi}$. To reconstruct the code-free samples, $r_k$, the phase of this term is back rotated. There are K millisecond-samples in the current control period to reconstruct. Let $[s_1, s_2, s_3, \ldots, s_k, \ldots, s_K]$ be the sample array before reconstruction and let $[r_1, r_2, r_3, \ldots, r_k, \ldots, r_K]$ be the sample array after reconstruction. The carrier NCO frequency for the current control period is denoted f. The reference frequency for the I/Q sample reconstruction is $f_0$. This is the assumed frequency of the signal output by the IF processing unit 30, at the very start of the stream. The effect of the carrier NCO 44 and the mixer 40 is to rotate the phase of the incoming samples by an amount $e^{j2\pi(f-f_0)}$. However, in the present example, for simplicity, it is assumed that the reference frequency is zero ($f_0 = 0$). The reconstruction is calculated as follows:

$$r_k = s_k e^{-j2\pi f kT - j\Phi}$$

Here, the term $e^{j2\pi f}$ back rotates the phase $e^{j2\pi f}$ that the carrier NCO applies for real-time tracking during the control period. Meanwhile, the term $e^{-j\Phi}$ ensures phase continuity between control periods.

The code-free samples output by the first processor (reconstruction processor 230) are output to the second processor for analysis. In this example, the second processor is a Kalman smoother 240. It processes a sequence of the code-free samples together, to estimate the carrier phase over the entire snapshot. This can be considered a re-estimation of the carrier phase for each control period, since the real-time tracking loop has already generated (at least implicitly) a first estimate for each control period. The Kalman smoother 240 has the advantage that it can take more information into account than the real-time tracking loop - it can "look" forwards and backwards in time, to derive an optimal sequence of carrier phase estimates that best matches the full sequence of code-free samples. In the present example, the receiver is configured to produce a navigation solution every second and the Kalman smoother 240 is configured to process a snapshot containing one second's worth of code-free samples together. The end of the sequence output by the Kalman smoother is the accumulated carrier phase at the end of the snapshot. This accumulated carrier phase estimate is used to produce the navigation solution (in particular, to determine the ambiguities in the real-time kinematic (RTK) algorithm, which is used to produce a high-precision estimate of position, velocity, and time).

The present inventor has found that the (accumulated) carrier phase estimate derived using the Kalman smoother is more robust to deep fading than the carrier phase estimates implied by the tracking loop (that is, the phase of the local carrier signal generated by the carrier generator 42). The Kalman smoother may be able to avoid or correct cycle-slips that would degrade the carrier phase estimates implied by the real-time operation of the tracking loop, for example.

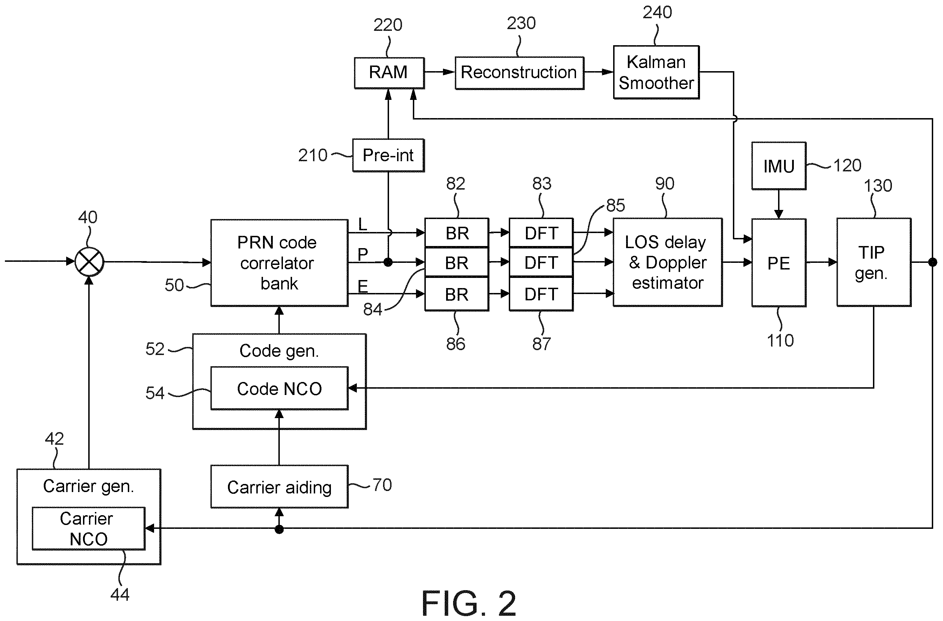

Fig. 2 is a block diagram of a GNSS receiver according to a second example. The antenna 10, RF front-end 20, and IF processing unit 30 are omitted, for simplicity. They are the same as in the example of Fig. 1. The mixer 40, bank 50 of correlators, carrier generator 42, code generator 52, and carrier aiding block 70 operate in the same way as in Fig. 1, and will not be further described for this reason.

The operation of the GNSS receiver illustrated in Fig. 2 differs from that illustrated in Fig. 1 by the way in which the carrier and chipping code (spreading code) of the GNSS signal are tracked. In the GNSS receiver illustrated in Fig. 2, there is no feedback loop within the measurement engine itself. Instead, high-rate feedback to control the carrier NCO 44 and the code NCO 54 is provided from a positioning engine (PE) 110, which is responsible for calculating the navigation solution.

For the GNSS receiver shown in Fig. 2, the outputs of the late, prompt, and early taps of the bank 50 of correlators are provided as inputs to respective bit removal (BR) blocks 82, 84, and 86. When receiving a part of the GNSS signal that contains data (for example, a navigation message), the bit removal blocks 82, 84, 86 wipe off the detected data bit by multiplying the complex correlator output by 1 or -1, as appropriate. When receiving a part of the GNSS signal that contains a pilot sequence, there is no need for bit detection, since the bit sequence of the pilot signal is known in advance (given timing synchronization of the input signal).

The output of each bit removal block 82, 84, 86 is provided as input to a respective discrete Fourier transform (DFT) block 83, 85, 87. Each DFT block calculates a Fourier transform of the complex correlator outputs, over a defined coherent integration interval. The outputs of the DFT blocks 83, 85, 87 are provided as input to a line-of-sight (LoS) delay and Doppler estimator 90. The estimator 90 uses the information from the Fourier transforms to estimate a carrier phase and code phase of the GNSS signal.

The collective output of the DFT blocks 83, 85, 87 forms a two-dimensional matrix spanning a range of frequencies and a range of code-phase delays. In time variant channels, each multipath component typically possesses a Doppler and delay value that is different to the LoS values. In this delay-frequency matrix, a correlation triangle shows up at a specific Doppler value, with the peak of the triangle indicating the vicinity of delay and Doppler of a multipath component. By inspecting the matrix, several such peaks in the delay-frequency grid can be identified. The peak with the shortest time-of-arrival is detected as the line-of-sight path. When this is done, the taps on both sides of the correlation triangle are interpolated to give an estimate of the delay.

When the GNSS signal is being tracked accurately (and in the absence of fast dynamics) the LoS component should remain aligned with the "prompt" tap, with a Doppler frequency of zero. Any deviation of the code phase of the local spreading code from the code phase of the received GNSS signal will cause either the early or the late correlator tap to show an output with a greater magnitude than the prompt tap. Meanwhile, any deviation of the carrier frequency of the local carrier signal from the carrier frequency of the received GNSS signal will show up in the Fourier transform as a peak at a nonzero frequency.

The output of the estimator 90 corresponds to the output of the code loop controller 62 and the carrier loop controller 64 of Fig. 1. However, in the configuration illustrated in Fig. 2, the output of the estimator is not used directly to control the carrier generator 42 or the code generator 52. Instead, the output of the estimator 90 is provided as one of a number of inputs to the positioning engine 110. The positioning engine 110 also receives input from an inertial measurement unit (IMU) 120. One output of the positioning engine is a navigation solution, including estimates of position, velocity, time (PVT), and other state variables. The navigation solution is produced once per epoch and is passed to a "Tracking Intelligence Provider" (TIP) generator 130. The positioning engine 110 also outputs more frequent estimates of velocity, based on the inertial measurements that have been received since the most recent navigation solution. These velocity estimates are also output to the TIP generator. By way of example, the interval between epochs may be 1 s; therefore, the navigation solution may be output at a frequency of 1 Hz. The interval between velocity estimates may be 20 ms; thus, the velocity estimates may be output at a frequency of 50 Hz. (Here, the 20 ms corresponds to the control period of the carrier generator 42.)

The TIP generator 130 converts the outputs of the positioning engine 110 into a code phase and chipping rate control signal for the code generator 52 and a carrier control signal for controlling the frequency of the carrier generator 42. To do this, the TIP generator 130 compares the current satellite positions with the current PVT solution from the positioning engine 110. From this comparison, the TIP generator predicts the delay and Doppler along the line-of-sight vector from the receiver to each of the satellites.

The code phase delay control signal is updated at the lower rate (for example, 1 Hz). This is because the code phase estimates are produced as part of the navigation solution once per epoch. The carrier control signal is updated at the higher rate, based on the more frequent velocity estimates. Note that, although the code phase delay control signal is only updated at the lower rate (e.g., 1 Hz), the code phase of the code generator 52 is updated at the higher rate (e.g., 50 Hz). This is because the carrier aiding unit 70 updates the code generator 52 continually in the interval between epochs, at the higher rate, based on the higher rate velocity (and resulting Doppler) estimates. In this way, the high-rate velocity/Doppler estimates can help to compensate for acceleration and high-order dynamics of the receiver during the coherent integration by the correlator bank and DFT blocks. Note, however, that the code phase of the code NCO is re-initialised at the start of each epoch based exclusively on the code phase delay control signal. In other words, the evolution of the code phase over the preceding epoch due to the cumulative influence of the carrier aiding block 70 does not affect the setting of the code phase at the start of the next epoch.

The measurement engine in Fig. 2 comprises blocks 40-90 (but not blocks 110, 120, 130). The output of the measurement engine is the output of the estimator 90. The positioning engine 110 receives corresponding inputs from multiple measurement engines - one for each GNSS signal that is being tracked. Typically, at least four signals from different satellites will be tracked, in order to support the calculation of the navigation solution. The positioning engine 110 combines the information provided by the GNSS measurements from the various measurement engines with the information provided by inertial measurements from the IMU 120. To do this, the positioning engine 110 uses a Kalman filter or other state estimator. The output of the state estimator includes the position, velocity, and time (PVT) solution. As mentioned above, the TIP generator 130 predicts the Doppler frequency and code phase for each GNSS signal based on the PVT solution and corresponding satellite LoS vectors. Note that, in some examples, the functionality of the TIP generator 130 may be merged into the positioning engine 110. For example, the positioning engine 110 may output state estimates for Doppler frequency and code phase for each satellite.

The configuration illustrated in Fig. 2 may be particularly suitable in difficult signal reception conditions. Completing the tracking loops through the positioning engine 110, helps to make the feedback to the code generator 52 and carrier generator 42 as robust and stable as possible. In situations where the tracking lock on one weak GNSS signal might otherwise be lost by the respective measurement engine, if it were working in isolation, the information provided by the other measurement engines (and the IMU 120) can enable continued tracking of the weak GNSS signal.

At the same time, because the tracking can keep a lock on the GNSS signal even in challenging signal reception conditions (and even in cases of fast dynamics, thanks to the use of the inertial measurements), the coherent integration time of the bank 50 of correlators and the subsequent DFT blocks 83, 85, 87 can be increased. This in turn increases the sensitivity of the measurement engine, enabling it to acquire and track weaker signals. In one example according to the present disclosure, the coherent integration time of the DFT blocks is 1 s.

A sequence of operations performed for each epoch will now be described in greater detail. Once per epoch, the positioning engine 110 provides code phase and velocity input from the navigation solution. This is used to set the NCOs 44 and 54. The bank 50 of correlators begins producing millisecond samples. The positioning engine 110 provides high-rate velocity input many times per epoch (for example 50 times per epoch, in the present example). Each time fresh velocity input is provided, the NCOs 44 and 54 are set based on it (via the TIP generator 130, which converts the velocity estimates to Doppler estimates). The code NCO 54 is set via the carrier aiding unit 70; the carrier NCO is set directly. The bank 50 of correlators continues producing millisecond samples. These are input to the DFT blocks 83, 85, 87 to calculate the DFT. After the Fourier Transforms are produced by the DFT blocks 83, 85, 87, they are evaluated by the estimator 90.

Optionally, the millisecond samples can be pre-integrated as soon as they are available, in order to begin calculating the DFT in a pipelined fashion. Alternatively, the millisecond samples can be stored until enough samples are available for a complete coherent integration period (e.g., 1 s) and the DFT can then be calculated using the complete set of samples.

According to the present example, the GNSS receiver is augmented with blocks 210, 220, 230, and 240 in a similar manner to the GNSS receiver of Fig. 1. The pre-integration unit 210 takes its input from the prompt (P) correlator tap, as before. The RAM 220, reconstruction processor 230, and Kalman smoother 240 operate in the same way as in the example of Fig. 1.

As shown in Fig. 2, an output of the Kalman smoother 240 is provided as input to the positioning engine 110. This provides the positioning engine 110, once per epoch (for example, once per second), with the carrier phase estimate produced by the Kalman smoother based on the sequence of code-free samples. In between these estimates provided by the Kalman smoother 240, the positioning engines relies on the "real time" frequency estimates that are produced by the LoS delay and Doppler estimator 90. The evolution of the carrier phase based on these frequency estimates governs the carrier phase of the carrier NCO 44.

In the current implementation of the GNSS receiver, the blocks 20, 30, 40, 42, 44, 50, 52, 54 and 220 are implemented in dedicated hardware. Blocks 62, 64, 70, 82-87, 90, 110, 120, 130, 210, 230 and 240 are currently implemented in software running on a processor of the GNSS receiver. However, they could alternatively be implemented in dedicated hardware.

It should be understood that the scope of the present disclosure is not limited to the examples described above. Many variations will be apparent to those skilled in the art, based on the foregoing description.

In the examples of Fig. 1 and Fig. 2, the code-free samples were generated by the reconstruction processor 230. However, in other examples, they may be generated in other ways. For instance, the code-free samples may be generated by wiping off a spreading code from the signal samples produced by the IF processing unit 30. This may comprise generating a local spreading code (like that generated by the code generator 52) and correlating the signal samples obtained from the IF processing unit 30 with this local spreading code, for example. In essence, this would be like reordering the blocks 40 and 50 in the diagrams of Figs. 1 and 2, to place the correlator bank 50 in front of the mixer 40 in the receiver processing chain. Such an example may avoid the need to reconstruct the code-free samples - therefore, the pre-integration unit 210 and the first processor (reconstruction processor 230) might not be required. However, it may be computationally intensive to carry out the correlation operations of the correlator bank 50 at the sampling rates required at the output of the IF processing unit 30. In this regard, computational efficiency may be one advantage of the configuration shown in Figs. 1 and 2, which relies on the reconstruction processor 230.

In the examples described above, the carrier- and code-free samples (I/Q samples) output from the correlator bank 50 (and optionally down-sampled by the pre-integration unit 210) were stored in the memory (RAM 220) before being processed by the first processor (reconstruction processor 230). Samples were accumulated in the RAM 220 over the entire one second interval between epochs. Likewise, carrier control signal values were accumulated over the one second interval. However, this might not be necessary in all implementations. Shorter batches of samples could be accumulated in the memory temporarily. For example, the samples corresponding to one control period (for example, lasting 20 ms) may be accumulated in the memory (along with the respective carrier control signal value). They may then be processed by the first processor at the end of the control period (for example, at the end of 20 ms rather than waiting until the end of 1 s).

As a further alternative, in other examples, the samples could be processed by the first processor without being stored in the memory at all. That is, they may be passed directly from the pre-integration unit 210 or the prompt (P) correlator tap to the reconstruction unit 230. Referring to Figs. 1 and 2, this could be implemented by reversing the positions of the reconstruction processor 230 and the RAM 220 in the block diagram.

In the examples described above, it was assumed that a navigation solution was to be calculated regularly, once per second. However, it is not essential that the navigation solution is calculated at fixed, regular intervals in this way. In other examples, the navigation solution may be calculated in response to a request from a software application. These requests may be at regular or irregular intervals. In such an example, the Kalman smoother may be configured to process a sequence of code-free samples that corresponds in length to the duration of time that has elapsed since the last navigation solution was computed. This duration of time may vary, between consecutive navigation solutions.

In Figs. 1 and 2, the second processor is a Kalman smoother. This is not essential. The Kalman smoother could be replaced with another estimator suitable for estimating the carrier phase from the sequence of code-free samples in the snapshot. Generally, any estimator that exploits the entire observation can be used. In one alternative example, the Kalman smoother could be replaced with a Kalman filter. In another alternative example, instead of a traditional state estimator like a Kalman filter or Kalman smoother, the second processor may comprise a neural network trained to estimate the carrier phase from code-free samples. Such a neural network may be trained by obtaining a training data set comprising a plurality of sequences of code-free samples. (These sequences could be either real or generated by simulation of the GNSS receiver.) Each sequence is accompanied by a corresponding "ground truth" carrier phase value, which is the output variable that the neural network is trained to infer based on the sequence of code free samples. In some cases, the ground truth may include a carrier phase value for each control period, and the neural network may, correspondingly, be trained to infer every value of the carrier phase (one value per control period). However, since it is the final carrier phase that is of primary interest for each snapshot, the neural network may instead be trained to infer solely that final carrier phase value. This may reduce the amount of training data required and the computational burden of training. Once suitable training data is available, the neural network may be trained using any suitable algorithm, including but not limited to the known back-propagation algorithm.

The neural network may be of any suitable type, including but not limited to a recurrent neural network (RNN), a convolutional neural network (CNN), long short-term memory (LSTM) network, or attention-based network. In some examples, the code-free samples may be pre-integrated before they are input to the neural network. From each (pre-integrated) code free sample the system can derive magnitude and (cumulative) carrier phase. Both the magnitude and (cumulative) phase enter the neural network for phase estimation. In principle, during the training of the neural network, the magnitude will manifest itself as a confidence metric for the phase estimates.

In the examples above, illustrated in Figs. 1 and 2, the Kalman smoother processed one second's worth of data as a batch (snapshot) together, to derive improved carrier phase estimates. In a one implementation, this approach may result in producing one such carrier phase estimate per second. However, it is not essential that the rate of generation of estimates is tied to the size of the batch (i.e., the duration of the snapshot) in this way. In an alternative implementation, the Kalman smoother may process overlapping batches (snapshots). For example, the Kalman smoother may still process batches (snapshots) that are 1 s long, but successive batches may overlap by 0.5 s. In this way, the Kalman smoother may produce a carrier phase estimate every 0.5 s, instead of every 1 s. This is achieved without reducing the quantity of data considered for each estimate.

The 20 ms control periods described above may be beneficial; however, the method is not limited in this respect. Longer or shorter control periods may be chosen. The choice may be based on the signal conditions expected or experienced in use. For example, in highly dynamic scenarios, where the receiver is subject to frequent rapid changes in speed and/or direction, a shorter control period may be desirable, to better cope with the signal dynamics. Conversely, if the receiver is expected to be static, it might be beneficial to extend the control period. Alternatively, or in addition, in some examples, the control period may be selected based on the instantaneous carrier signal to noise density ratio ($C/N_0$). For instance, when $C/N_0$ is high, a shorter control period may be desirable, to reduce the impact of high dynamics. Conversely, when CINe is low, it may be desirable to increase the control period, to enhance sensitivity (at least when dynamics do not present an additional challenge).

In the examples above, the measurement engine was described as producing GNSS measurements from the GNSS signal. This is indeed the typical primary purpose of a measurement engine. However, the measurement engine could also (or instead) produce an indication of whether or not the GNSS signal is detected - that is whether a GNSS signal has been acquired, prior to tracking it and/or making GNSS measurements. This may be useful in particular if GNSS signal lock is lost during tracking of a GNSS signal.

Other variations involve the way in which the blocks are implemented. In the examples discussed above, certain components were defined in software or software modules running on a processor of the GNSS receiver. However, in other examples, some or all of these units may be implemented in dedicated, fixed-function hardware. Likewise, components that were defined in hardware, according to the examples above, may be defined in software, in other examples.

For instance, the first processor (reconstruction processor 230) and the second processor (for example, Kalman smoother 240) were described above as though they were two separate components. This is of course not limiting on the scope of the present disclosure. Both elements may be implemented in the same hardware. In particular, both of these elements may be implemented in software running on one or more processors such as a CPU or DSP.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The examples may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various examples may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Examples as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

## Claims

1. A method of processing a GNSS signal received at a receiver, the method comprising:

   obtaining samples of the GNSS signal, wherein the samples contain a carrier signal modulated by a spreading code;
   generating, based on the obtained samples, code-free samples, wherein the code-free samples contain the carrier signal but the spreading code has been wiped off;
   storing a sequence of the code-free samples, the sequence having an associated duration; and
   analysing the stored sequence to estimate one or more signal characteristics over the duration of the sequence, wherein the one or more signal characteristics include a carrier phase of the carrier signal.

2. The method of claim 1, comprising:

   generating a local carrier signal;
   mixing the obtained samples with the local carrier signal to generate carrier-free signal samples;
   generating a local spreading code;
   generating code-free and carrier-free samples, comprising correlating the carrier-free signal samples with the local spreading code; and
   generating the code-free samples based at least in part on the code-free and carrier-free samples.

3. The method of claim 2, comprising:

   storing a sequence of the code-free and carrier-free samples to provide stored signal samples; and
   generating the code-free samples based at least in part on the stored signal samples.

4. The method of claim 2, comprising:

   subsampling the code-free and carrier-free samples to generate sub-sampled signal samples;
   storing a sequence of the sub-sampled signal samples to provide stored signal samples; and
   generating the code-free samples based at least in part on the stored signal samples.

5. The method of claim 4, wherein subsampling the code-free and carrier-free samples comprises at least one of:

   summing groups of the code-free and carrier-free samples; and
averaging groups of the code-free and carrier-free samples.

6. The method of any one of claims 3 to 5, comprising:

generating a carrier control signal, wherein generating the local carrier signal is controlled by the carrier control signal;
storing a sequence of values of the carrier control signal; and
generating the code-free samples based on the stored signal samples and the stored sequence of values of the carrier control signal.

7. The method of claim 6, wherein generating the code-free samples based on the stored signal samples and the stored sequence of values of the carrier control signal comprises:
for each stored value of the carrier control signal, rotating a phase of a corresponding subset of the stored signal samples based on said stored value.

8. The method of claim 6 or claim 7, further comprising estimating at least one of a residual carrier frequency and a residual carrier phase, for the GNSS signal, based on the code-free and carrier-free samples, wherein the carrier control signal is a feedback signal that is generated based on a result of said estimating.

9. The method of any one of claims 1 to 8, comprising:

estimating at least one of a residual carrier frequency and a residual carrier phase, for the GNSS signal; and
generating a carrier control signal based on a result of said estimating, wherein generating the local carrier signal is controlled by the carrier control signal.

10. The method of any one of the preceding claims, wherein the sequence is a first sequence, the method further comprising:

obtaining second samples of the GNSS signal;
generating, based on the obtained second samples, second code-free samples, wherein the second code-free samples contain the carrier signal but the spreading code has been wiped off;
storing a second sequence of the second code-free samples, the second sequence having an associated duration; and
analysing the stored second sequence to estimate one or more signal characteristics over the duration of the second sequence, wherein the one or more signal characteristics include a carrier phase of the carrier signal,

wherein the second sequence overlaps with the first sequence.

11. The method of any one of the preceding claims, wherein analysing the stored sequence comprises processing the stored sequence using at least one of:

a Kalman smoother;
a Kalman filter; and
a neural network trained to estimate the one or more signal characteristics.

12. The method of any one of the preceding claims, further comprising using the one or more estimated signal characteristics to assist in the calculation of a position fix.

13. A computer program comprising computer program code configured to cause one or more physical computing devices to perform all the steps of a method as claimed in any one of the preceding claims when said computer program is run on said one or more physical computing devices.

14. A Global Navigation Satellite System, hereinafter GNSS, receiver, configured to process a GNSS signal, the GNSS receiver comprising a measurement engine (40, 42, 44, 50, 52, 54, 62, 64, 70, 82, 84, 86, 83, 85, 87, 90, 210, 220, 230, 240) configured to:

obtain samples of the GNSS signal, wherein the samples contain a carrier signal modulated by a spreading code;
generate, based on the obtained samples, code-free samples, wherein the code-free samples contain the carrier signal but the spreading code has been wiped off;
store a sequence of the code-free samples, the sequence having an associated duration; and
analyse the stored sequence to estimate one or more signal characteristics over the duration of the sequence, wherein the one or more signal characteristics include a carrier phase of the carrier signal.

**FIG. 1**

FIG. 2

Europäisches
Patentamt

European
Patent Office

Office européen
des brevets

# EUROPEAN SEARCH REPORT

**Application Number**

EP 24 15 6077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/062781 A1 (MATHEWS MICHAEL B [US] ET AL) 6 March 2014 (2014-03-06) | 1,9-14 | INV.<br>G01S19/37 |
| A | * figures 14B, 16, 17 *<br>* paragraph [0009] *<br>* paragraph [0032] *<br>* paragraphs [0129] - [0136] *<br>* paragraphs [0230] - [0244] *<br>* paragraphs [0261] - [0264] *<br>----- | 2-8 | ADD.<br>G01S19/24<br>G01S19/29<br>G01S19/43<br>G01S19/22 |
| A | KEWEN SUN: "GNSS Code Tracking in Presence of Data",<br>WIRELESS COMMUNICATIONS, NETWORKING AND MOBILE COMPUTING (WICOM), 2011 7TH INTERNATIONAL CONFERENCE ON, IEEE,<br>23 September 2011 (2011-09-23), pages 1-7,<br>XP032059622,<br>DOI: 10.1109/WICOM.2011.6040252<br>ISBN: 978-1-4244-6250-6<br>* the whole document *<br>----- | 1-14 | |

**TECHNICAL FIELDS SEARCHED (IPC)**

G01S

The present search report has been drawn up for all claims

| Place of search | Date of completion of the search | Examiner |
|---|---|---|
| Munich | 19 July 2024 | Haugg, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 6077

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | Publication date |
|---|---|---|---|
| US 2014062781 A1 | 06-03-2014 | NONE | |

EPO FORM P0459

For more details about this annex : see Official Journal of the European Patent Office, No. 12/82